# EUROPEAN PATENT APPLICATION

(11) **EP 4 489 154 A1**
(43) Date of publication of application: **08.01.2025**
(21) Application number: 23216384.0
(22) Date of filing: 13.12.2023
(51) Int. Cl.: H01M 10/04, H01M 50/107, H01M 50/152, H01M 50/148, H01M 50/167, H01M 50/179, H01M 50/188, H01M 50/529, H01M 50/531, H01M 50/533, H01M 50/538, H01M 50/545, H01M 50/548, H01M 50/559, H01M 50/566

(54) **CYLINDRICAL BATTERY CELL, BATTERY ASSEMBLY AND ELECTRICAL DEVICE**

(30) Priority: 07.07.2023 CN 202321793900 U
(71) Applicant: AESC Japan Ltd., Yokohama-Shi, Kanagawa 220-0012 (JP)
(72) Inventor: JI, Peng, Jiangyin City, Wuxi City, 214443 (CN)
(74) Representative: Becker, Eberhard

(57) **Abstract**

Disclosed are a cylindrical battery cell (100), a battery assembly and an electronic device. The cylindrical battery cell (100) includes a housing (110), an electrode assembly (120) and a current collector (130). The housing (110) includes an opening (114), and a rolling groove (113) is formed on the side wall of the opening (114). The electrode assembly (120) is sealed and disposed in the housing (110), and the rolling groove (113) limits the movement of the electrode assembly (120) in the axial direction. A first tab (121) is disposed on one side of the electrode assembly (120) facing the opening (114). The current collector (130) disposed in the housing (110) includes a housing connection portion (133) connected to one side of the rolling groove (113) facing away from the electrode assembly (120) and a tab connection portion (132) connected to the first tab (121).

## Description

### BACKGROUND

### Technical Field

The disclosure relates to the field of battery technology, specifically to a cylindrical battery cell, a battery assembly and an electronic device.

### Description of Related Art

Currently, the 46-series large cylindrical battery cell is increasingly favored by major car companies due to its high safety, long service life, excellent fast charging performance, excellent battery consistency and low production cost. Nowadays, the mainstream solution for large cylindrical battery cells employs the full-tab design and the configuration of disposing positive electrode and negative electrode on the same side. The all-tab wound core is connected to the electrode pillar and the housing through the positive electrode current collector and negative electrode current collector respectively, thereby disposing the positive electrode and the negative electrode on the same side. When the current collector is connected to the housing, it is required to perform process groove shaping on the opening of the housing to form a relatively stable welding plane. Then, by applying tooling pressure, the housing connection portion on the current collector is pressed tightly against the welding plane, and finally welded to achieve a negative charge on the housing. In the process of pressing the housing connection portion tightly against the welding plane, since relative displacement is very likely to occur in the radial direction between the housing connection portion and the rolling groove of the housing, it is difficult to ensure a stable welding plane between the current collector and the rolling groove, and therefore the welding quality tends to be poor.

### SUMMARY

In view of the above shortcomings of the related art, the present disclosure provides a cylindrical battery cell, a battery assembly and an electronic device to solve the technical problem of conductivity stability between the current collector and the housing affected by relative displacement that often occurs in the radial direction between the current collector and the rolling groove.

In order to achieve the above purpose and other related purposes, the present disclosure provides a cylindrical battery cell, including: a housing, an electrode assembly and a current collector. The housing includes an opening, and a rolling groove is formed on the side wall of the opening. The electrode assembly is sealed and disposed in the housing, and the rolling groove limits the movement of the electrode assembly in the axial direction. A first tab is disposed on one side of the electrode assembly facing the opening. The current collector is disposed in the housing, and the current collector includes a housing connection portion, a tab connection portion and a connection arm. The housing connection portion is connected to the tab connection portion through the connection arm. The housing connection portion is connected to one side of the rolling groove facing away from the electrode assembly, and the tab connection portion is connected to the first tab; wherein, a positioning portion is disposed on the housing connection portion and/or the connection arm, and the positioning portion is disposed to limit displacement of the housing connection portion in the radial direction.

In an example of the cylindrical battery cell of the present disclosure, the current collector further includes a plate body, the housing connection portion and the plate body are connected through the connection arm, and the housing connection portion extends along the circumferential direction of the housing. The positioning portion is formed by the housing connection portion extending toward the electrode assembly along the height direction of the housing, and the positioning portion abuts against the inner side wall of the rolling groove.

In an example of the cylindrical battery cell of the present disclosure, at least two positioning portions are disposed on the housing connection portion, and the at least two positioning portions are located on both sides of the connection arm.

In an example of the cylindrical battery cell of the present disclosure, the positioning portion is formed by the connection arm extending toward the electrode assembly along the height direction of the housing, and the positioning portion abuts against the inner side wall of the rolling groove.

In an example of the cylindrical battery cell of the present disclosure, an obtuse angle is formed between the positioning portion and the housing connection portion.

In an example of the cylindrical battery cell of the present disclosure, a stress buffering structure is disposed on the connection arm.

In an example of the cylindrical battery cell of the present disclosure, the connection arm, the housing connection portion and the plate body are formed integrally. The connection arm includes a plurality of bending portions, and the bending portions are deformed when being pressed.

In an example of the cylindrical battery cell of the present disclosure, the connection arm and the housing connection portion are independent parts, and the connection arm is made of a flexible material.

In an example of the cylindrical battery cell of the present disclosure, a sealing ring is disposed on one side of the rolling groove away from the electrode assembly, and an avoidance structure is disposed on an end surface of the sealing ring facing the housing connection portion.

In an example of the cylindrical battery cell of the present disclosure, the avoidance structure is an annular groove structure, and the housing connection portion is accommodated in the annular groove structure.

In an example of the cylindrical battery cell of the present disclosure, the connection arm is disposed between the adjacent tab connection portions, and the connection arm and the tab connection portion are partially disconnected.

In an example of the cylindrical battery cell of the present disclosure, an exhaust hole is disposed in the center of the current collector, and a cut is disposed on a side wall along a circumference of the exhaust hole.

The disclosure provides a battery assembly, which includes the cylindrical battery cell described in any one of the above examples.

The disclosure further provides an electronic device, which includes the battery assembly.

In the cylindrical battery cell of the present disclosure, a positioning portion is disposed on the housing connection portion and/or the connection arm of the current collector, and the positioning portion is disposed to limit the displacement of the housing connection portion in the radial direction. Such configuration, on the one hand, makes it possible to accurately position the current collector in the radial direction of the housing during the process of pressing the housing connection portion tightly against the rolling groove, thereby ensuring good contact between the housing connection portion and the rolling groove, so that a stable current-carrying area is formed between the current collector and the housing, and the stability of the current-carrying capability of the battery cell is improved; on the other hand, by improving the positioning accuracy between the housing and the current collector, the quality stability during the cell assembly process may be enhanced, thereby increasing the stability of the performance of the battery cell.

### BRIEF DESCRIPTION OF THE DRAWINGS

In order to explain the embodiments of the present disclosure or the technical solutions in the related art more clearly, the drawings needed to be used in the description of the embodiments or the related art will be briefly introduced below. Clearly, the drawings in the following description are only some embodiments of the present disclosure. For those of ordinary skill in the art, other drawings may be obtained based on these drawings without exerting creative efforts.
FIG. 1 is a schematic view of the overall structure of an embodiment of a cylindrical battery cell of the present disclosure.
FIG. 2 is a schematic view of a disposing position between the current collector and the rolling groove in an embodiment of the cylindrical battery cell of the present disclosure.
FIG. 3 is a schematic view of the overall structure of the current collector in an embodiment of the cylindrical battery cell of the present disclosure.
FIG. 4 is a top view schematically illustrating the disposing positions of the current collector and rolling groove in an embodiment of the cylindrical battery cell of the present disclosure.
FIG. 5 is a partial enlarged view of a region C in FIG. 4.
FIG. 6 is a cross-sectional view of the overall structure of a housing in an embodiment of the cylindrical battery cell of the present disclosure.
FIG. 7 is a cross-sectional view showing a partial structure after the opening of the housing is pier-sealed in an embodiment of the cylindrical battery cell of the disclosure.
FIG. 8 is a cross-sectional view showing a partial structure before the opening of the housing is pier-sealed in another embodiment of the cylindrical battery cell of the disclosure.
FIG. 9 is a cross-sectional view of the overall structure of a sealing ring in an embodiment of the cylindrical battery cell of the present disclosure.

### REFERENCE SIGNS LIST

100: cylindrical battery cell; 110: housing; 111: end wall; 112: side wall; 113: rolling groove; 1131: welding plane; 1132: inner side wall; 114:opening; 120: electrode assembly; 121: first tab; 130: current collector; 131: welding plane; 132: tab connection portion; 133: housing connection portion; 1331: welding mark; 134: connection arm; 1341: bending portion; 135: exhaust hole; 1351: cut; 136: hollow region; 140: positioning portion; 150: sealing ring; 151: avoidance structure; 160: end cap

### DESCRIPTION OF THE EMBODIMENTS

The following describes the implementation of the present disclosure through specific examples. Those skilled in the art can easily understand other advantages and effects of the present disclosure from the contents disclosed in this specification. The present disclosure can also be implemented or applied through other different specific implementations. Various details in this specification can also be modified or changed in various ways based on different viewpoints and applications without departing from the spirit of the present disclosure. It should be noted that, as long as there is no conflict between the embodiments, the following embodiments and the features in the embodiments may be combined with each other. It should also be understood that the terminology used in the embodiments of the present disclosure is for describing specific embodiments, but not for limiting the scope of the present disclosure. Test methods without specifying specific conditions in the following examples usually adopt conventional conditions or conditions recommended by various manufacturers.

When an embodiment provides a numerical range, it should be understood that, unless otherwise stated in the present disclosure, the two endpoints of each numerical range and any value between the two endpoints may be selected. Unless otherwise defined, all technical and scientific terms used in the present disclosure are consistent with the knowledge of the related art and the description of the present disclosure by those skilled in the art. They may also be used with the methods and methods described in the embodiments of the present disclosure. Equipment and materials are similar or equivalent to any methods, equipment and materials of the related art to implement the present disclosure.

It should be noted that terms such as "upper", "lower", "left", "right", "middle" and "one" cited in this specification are only for convenience of description and are not used to limit the scope of this specification. As for the implementable scope of the disclosure, changes or adjustments in the relative relationships shall also be regarded as the implementable scope of the disclosure, provided there is no substantial change in the technical content.

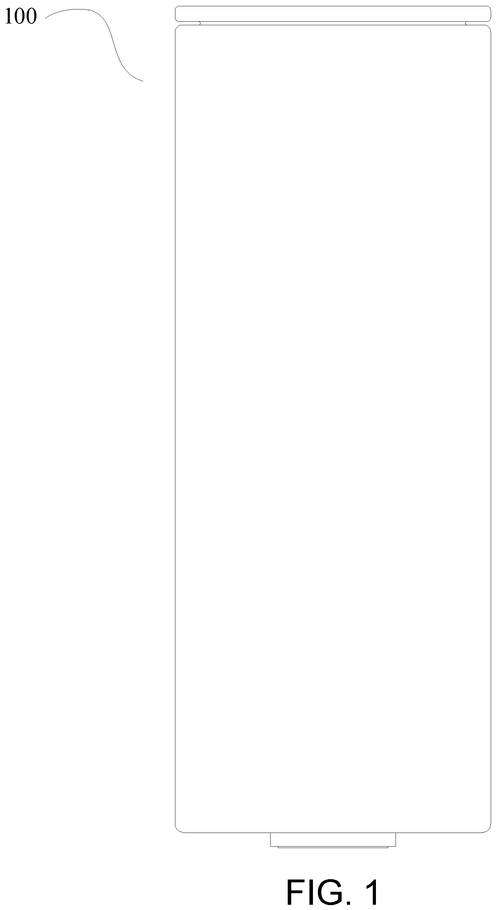

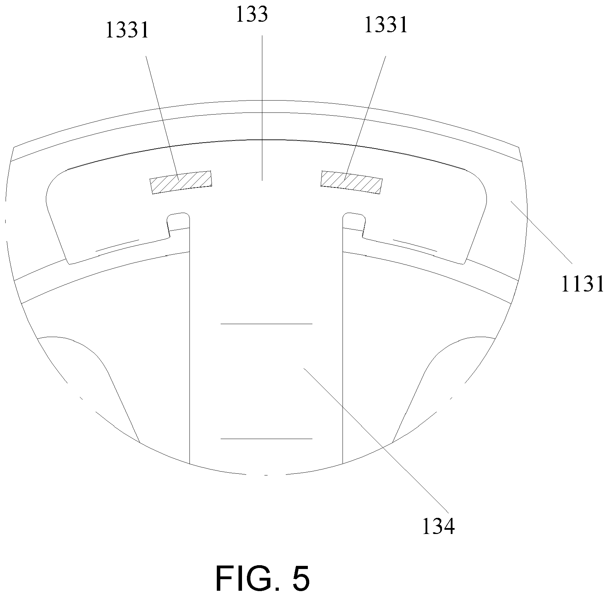

Please refer to FIG. 1 to FIG. 9. The disclosure provides a cylindrical battery cell 100 and an electronic device. The cylindrical battery cell 100 may be positioned in the radial direction during the process of pressing and connecting the housing connection portion 133 and the housing 110, thereby improving the configuration positioning accuracy between the current collector 130 and the housing 110. Furthermore, a smooth welding surface may be obtained between the housing connection portion 133 and the rolling groove 113, so that a stable current-carrying area is formed between the current collector 130 and the housing 110, and the stability of the current-carrying capacity of the cylindrical battery cell 100 is improved.

Please refer to FIG. 1 to FIG. 6. The cylindrical battery cell 100 includes: a housing 110, an electrode assembly 120, and a current collector 130. An accommodation cavity is formed in the housing 110 for accommodating the electrode assembly 120, an electrolyte (not shown) and other components. The accommodation cavity may be open at one end or open at both ends. Specifically, the shape of the housing 110 may be determined according to the specific size of the electrode assembly 120. The housing110 may be made of a variety of materials, such as copper, iron, aluminum, steel, aluminum alloy, etc. In order to prevent the housing from rusting after being used for a long time, the surface of the housing may also be plated with a layer of anti-rust material such as metallic nickel. In an example of the cylindrical battery cell 100 of the present disclosure, the housing 110 includes an end wall 111 and a side wall 112 surrounding the end wall 111. The side wall 112 and the end wall 111 together form a cylinder having a closed end and an opening 114 at the other end. A rolling groove 113 is formed on the side wall 112 of the housing 110 close to the opening 114, the rolling groove 113 is recessed toward the inside of the housing 110. A relatively smooth welding plane 1131 is formed on one side of the rolling groove 113 facing away from the electrode assembly 120.

The electronic assembly 120 is sealed in the housing 110, and there is no specific limitation to the sealing method. The electrode assembly 120 is a component in the battery cell where electrochemical reactions occur. The housing 110 may include one or more electrode assemblies 120. The electrode assembly 120 is mainly formed by winding or stacking positive electrode sheets and negative electrode sheets, and normally a separator is disposed between the positive electrode sheet and the negative electrode sheet. The positive electrode sheet includes a positive electrode current collecting body and a positive electrode active substance layer. The positive electrode active substance layer is coated on the surface of the positive electrode current collecting body. The positive electrode current collecting body includes a positive electrode coating region and a positive electrode tab connected to the positive electrode coating region. The positive electrode coating region is coated with the positive electrode active substance layer, and the positive electrode tab is not coated with the positive electrode active substance layer. The negative electrode sheet includes a negative electrode current collecting body and a negative electrode active substance layer. The negative electrode active substance layer is coated on the surface of the negative electrode current collecting body; the negative electrode current collecting body includes a negative electrode coating region and a negative electrode tab connected to the negative electrode coating region. The negative electrode coating region is coated with the negative electrode active substance layer and the negative electrode tab is not coated with the negative electrode active substance layer. Taking lithium-ion batteries as an example, the material of the positive electrode current collecting body may be aluminum, and the positive electrode active substance layer includes a positive electrode active substance. The positive electrode active substance may be lithium cobalt oxide, lithium iron phosphate, ternary lithium or lithium manganate, etc. The material of the negative electrode current collecting body may be copper, and the negative electrode active substance layer may include a negative electrode active substance. The negative electrode active substance may be carbon, silicon, or the like. The material of the separator may be PP (polypropylene) or PE (polyethylene), etc. In order to protect and insulate the battery cell, the battery cell may also be covered with an insulating film. The insulating film may be synthesized from PP, PE, PET (polyethylene terephthalate), PVC (Polyvinyl Chloride) or other polymer materials.

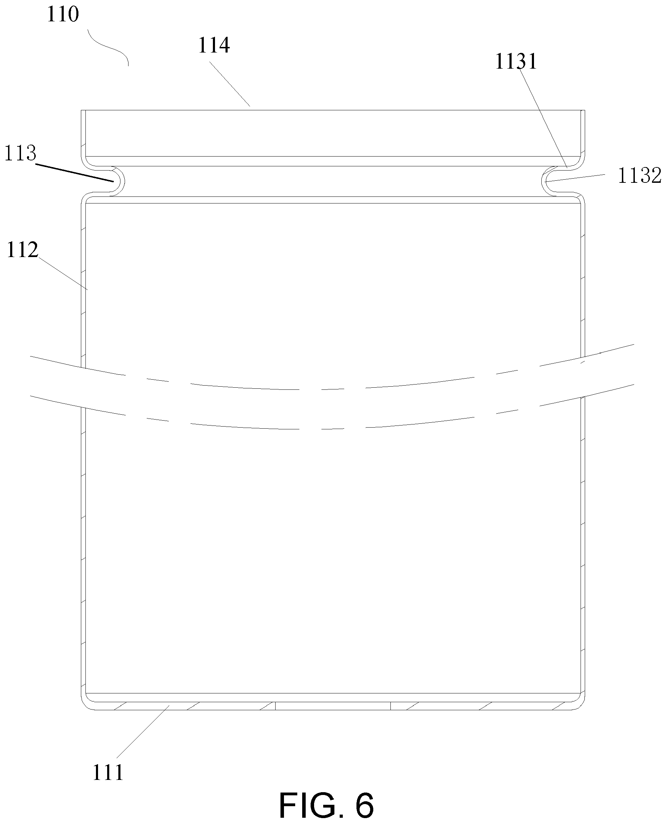

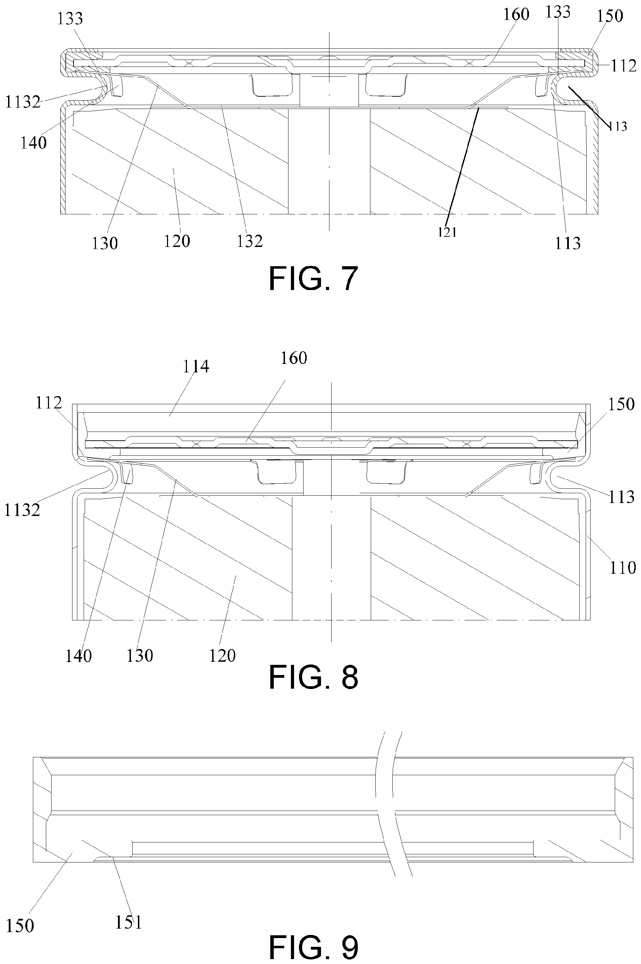

Please refer to FIG. 6 and FIG. 7. An end cap 160 is connected to the opening 114 of the housing 110 in a sealed manner. The current collector 130 is disposed between the end cap 160 and the electrode assembly 120. One end of the current collector 130 is electrically connected to the negative electrode tab of the electrode assembly 120. The other end of the current collector 130 is electrically connected to housing 110 to make the housing 110 be negatively charged as a whole. An explosion-proof valve is disposed on the end cap 160. When the cylindrical battery cell 100 undergoes thermal runaway, the high-temperature gas generated in the electrode assembly 120 will be discharged through the explosion-proof valve, thereby achieving explosion of the cylindrical battery cell 100 in the axial orientation.

When assembling the cylindrical battery cell 100, the electrode assembly 120 is disposed in the housing 110 first, and then the rolling groove 113 is formed on the side wall 112 of the housing 110 near the opening 114 to position the electrode assembly 120 in the axial direction; thereafter the current collector 130 is disposed so that one end of the current collector 130 is welded to the rolling groove 113, and the other end of the current collector 130 is welded to the negative electrode tab of the electrode assembly 120; finally, the sealing ring 150 and the end cap 160 are disposed at the opening 114. By performing pier-sealing on the housing 110 at the opening 114, the end cap 160 is sealed on the housing 110, thus completing the assembly process of the cylindrical battery cell 100.

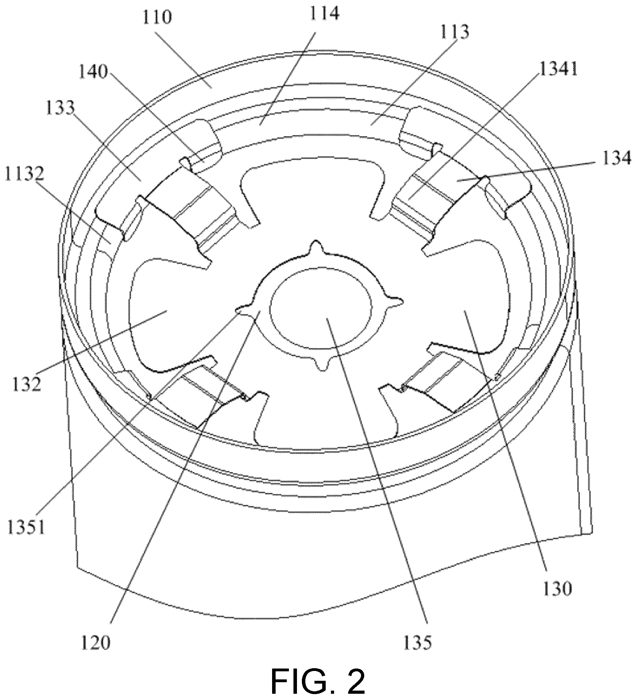

In an example of the cylindrical battery cell 100 of the present disclosure, please refer to FIG. 2 to FIG. 7. The electrode assembly 120 is sealed in the housing 110 and is located between the rolling groove 113 and the end wall 111 of the housing 110. The rolling groove 113 limits the movement of the electrode assembly 120 in the axial direction of the housing 110. A first tab 121 and a second tab are respectively disposed at both ends of the length direction of the electrode assembly 120, and the polarity of the first tab 121 is opposite to the polarity of the second tab, wherein the first tab 121 faces the opening 114 of the housing 110, and the first tab 121 is the negative electrode tab. It should be noted that in other examples, the first tab 121 may also be a positive electrode tab.

Please refer to FIG. 2 to FIG. 5. In an example of the cylindrical battery cell 100 of the present disclosure, the current collector 130 is disposed in the housing 110. The current collector 130 includes a housing connection portion 133, a tab connection portion 132 and a connection arm 134. One end of the connection arm 134 is connected to the housing connection portion 133, the other end of the connection arm 134 is connected to the tab connection portion 132, and the housing connection portion 133 is disposed around the outer periphery of the tab connection portion 132, and the housing connection portion 133 is welded to the welding plane 1131 on the rolling groove 113. The tab connection portion 132 is electrically connected to the first tab 121, thereby realizing that the housing 110 and the first tab 121 have the same electrical properties. There is no specific limitation to the number and specific structural form of the housing connection portion 133 and the tab connection portion 132 as long as a stable electrical connection relationship can be formed between the housing 110 and the first tab 121. A positioning portion 140 is disposed on the housing connection portion 133. The positioning portion 140 is disposed to limit the displacement of the housing connection portion 133 in the radial direction of the housing 110. There is no specific limitation to the specific structural form of the positioning portion 140 as long as it is possible to limit the displacement of the housing connection portion 133 in the radial direction of the housing 110. The positioning portion 140 may limit the displacement of the housing connection portion 133 in the radial direction by any position-limiting methods such as abutting against the inner wall of the housing 110 or abutting against the inner side wall 1132 of the rolling groove 113. In another embodiment, the positioning portion 140 is not disposed on the housing connection portion 133 and the positioning portion 140 is disposed on the connection arm 134. Such configuration may also achieve the effect of limiting the displacement of the housing connection portion 133 in the radial direction of the housing 110. In other embodiments, the positioning portion 140 may also be disposed on both the housing connection portion 133 and the connection arm 134. With such configuration, the above-mentioned advantageous effects may also be achieved. During the process of connecting the housing connection portion 133 with the rolling groove 113, the housing connection portion 133 needs to move close to the rolling groove 113 under the action of tooling pressure until the housing connection portion 133 is completely pressed against the welding plane 1131 of the rolling groove 113. During this process, the housing connection portion 133 will move close to the rolling groove 113 along the radial direction of the electrode assembly 120, and therefore a certain displacement will be generated in the radial direction. Since the housing connection portion 133 is in a free state in the radial direction during the pressing process, there will be a deviation in the resulting displacement in the radial direction, which affects the welding area of the housing connection portion 133 on the welding plane 1131 of the rolling groove 113, and in turn affects the conductivity stability of the housing 110 and current collector 130. By disposing the positioning portion 140 on the housing connection portion 133, a position-limiting function may be achieved in the radial direction in the pressing process of the housing connection portion 133, such that the magnitude of displacement in the radial direction may be accurately controlled, and accurate positioning and connection of the housing connection portion 133 in the radial direction of the rolling groove 113 may be realized. In this way, the stability of the welding area between the housing connection portion 133 and the rolling groove 113 is improved, so that the stability of the overall current-carrying capacity of the cylindrical battery cell 100 is enhanced. In the meantime, because the configuration and positioning accuracy between the housing 110 and the current collector 130 is enhanced, the stability of the assembly quality of the cylindrical battery cell 100 is improved, thereby increasing the stability of the performance of the cylindrical battery cell 100.

Please refer to FIG. 2 to FIG. 5. In an example of the cylindrical battery cell 100 of the present disclosure, the current collector 130 further includes a plate body 131. The plate body 131 is located in the middle of the current collector 130, and the connection arm 134 is located at the outer periphery of the current collector 130. The connection arm 134 is distributed radially along the center of the current collector 130. One end of the connection arm 134 is connected to the plate body 131, and the other end of the connection arm 134 is connected to the housing connection portion 133. The housing connection portion 133 extends along the circumferential direction of the housing 110 to form an arc-shaped plane. A positioning portion 140 extending toward the electrode assembly 120 side is formed on the side wall of the arc-shaped plane close to the axis of the current collector 130, and the positioning portion 140 abuts against the inner side wall 1132 of the rolling groove 113. With such configuration, the positioning portion 140 is relatively close to the housing connection portion 133, resulting in a better positioning effect. When the housing 110 is pier-sealed later, the positioning portion 140 will not easily interfere with the sealing ring 150 above the rolling groove 113, which facilitates the sealing of components in the subsequent process. The positioning portion 140 may be integrally formed with the housing connection portion 133, or may be formed separately and then connected by welding as long as the requirements for connection strength of the positioning portion 140 can be met. The positioning portion 140 may have a variety of structures, such as a panel structure, a cylindrical structure, an arc plate structure, or any other structure that can abut against the inner side wall 1132 of the rolling groove 113. Preferably, in order to facilitate molding and reduce production costs, in an example of the present disclosure, the positioning portion 140 is a panel structure. With such configuration, during the process of pressing the housing connection portion 133, there is a linear contact between the panel structure and the inner side wall 1132 of the rolling groove 113, which reduces the sliding resistance between the positioning portion 140 and the inner side wall 1132 of the rolling groove 113, thereby reducing the probability that the positioning portion 140 or the inner side wall 1132 of the rolling groove 113 is damaged during the pressing process. In this manner, it is possible to increase the accuracy for the positioning portion 140 of the housing 110 to perform positioning in the radial direction of the rolling groove 113. In other embodiments, the positioning portion 140 may also be an arc plate structure corresponding to the curvature of the inner side wall 1132 of the rolling groove 113. Such structure makes it possible to form a large contact area at the inner side wall 1132 of the rolling groove 113, thereby obtaining a higher resistance strength. However, the forming process of the arc plate structure is complicated and the manufacturing cost is high. Moreover, during the process of pressing the housing connection portion 133, there is surface contact between the arc plate and the inner side wall 1132 of the rolling groove 113, the sliding resistance between the positioning portion 140 and the inner side wall 1132 of the rolling groove 113 is large, and the positioning portion 140 or the inner side wall 1132 of the rolling groove 113 will be very likely to be damaged during the pressing process. As a result, the accuracy for the positioning portion 140 of the housing 110 to perform positioning in the radial direction of the rolling groove 113 might be reduced.

In the present disclosure, although there is no limitation to the number and specific position of the positioning portion 140 disposed on the housing connection portion 133, preferably, please refer to FIG. 2 to FIG. 5, in an example of the cylindrical battery cell 100 of the present disclosure, at least two positioning portions 140 are disposed on the housing connection portion 133, and the at least two positioning portions 140 are respectively located on both sides of the connection arm 134. The positioning portions 140 may be disposed close to both sides of the connection arm 134, or may be disposed at a certain distance from both sides of the connection arm 134. There is no limitation to the number of positioning portion 140 on both sides of the connection arm 134, and the number of positioning portion 140 on both sides of the connection arm 134 may be the same or different. With such configuration, positioning support points may be formed on both sides of the housing connection portion 133, thereby achieving better positioning strength and positioning accuracy during the positioning process. In an example of the present disclosure, two positioning portions 140 are disposed on the housing connection portion 133, the two positioning portions 140 are symmetrically disposed on both sides of the connection arm 134, and the two positioning portions 140 are respectively located on both ends of the housing connection portion 133 in the circumferential extension direction. With such configuration, symmetrical support strength may be obtained at both ends of the housing connection portion 133, so that the force may be more evenly applied to the housing connection portion 133, thereby reducing the stress on the housing connection portion 133 and improving the stability of the welding between the housing connection portion 133 and the rolling groove 113. In the meantime, since the positioning portion 140 is only disposed at both ends of the housing connection portion 133, the size of the positioning portion 140 is relatively independent from the extension size of the housing connection portion 133 in the circumferential direction. When the circumferential extension size of the housing connection portion 133 needs to be increased to meet the requirement of current-carrying capability, there is no need to increase the size of the positioning portion 140, while the small size of the positioning portion 140 may facilitate the sliding of the positioning portion 140 relative to the inner side wall 1132 of the rolling groove 113, thereby reducing the probability that the positioning portion 140 or the inner side wall 1132 of the rolling groove 113 is damaged during the pressing process.

In an example of the cylindrical battery cell 100 of the present disclosure, the positioning portion 140 is formed by the connection arm 134 extending along the height direction of the housing 110 toward the electrode assembly 120 side, and the positioning portion 140 abuts against the inner side wall 1132 of the rolling groove 113. The positioning portion 140 and the connection arm 134 may be integrally formed and connected, or they may be formed separately and then connected by welding as long as the requirements for connection strength of the positioning portion 140 can be met. Such configuration may also serve a positioning effect on the housing connection portion 133 in the radial direction, and the positioning portion 140 will not easily interfere with the sealing ring 150 above the rolling groove 113, and is also able to facilitate the subsequent sealing configuration of components. However, the positioning effect is not as good as that in which the positioning portion 140 is directly disposed on the housing connection portion 133.

In an example of the cylindrical battery cell 100 of the present disclosure, please refer to FIG. 2, FIG. 7 and FIG. 8. An obtuse angle a is formed between the positioning portion 140 and the housing connection portion 133, and the rolling groove 113 is disposed in the region where the obtuse angle α is disposed. When the housing connection portion 133 and the rolling groove 113 are welded together, the angle between the positioning portion 140 and the housing connection portion 133 is 90 degrees, which serves the function of welding positioning. After the welding is completed and the housing 110 is pier-sealed at the opening 114, due to the deformation of the rolling groove 113 in the radial direction, the rolling groove 113 exerts a radial force on the positioning portion 140 toward the axis of the electrode assembly 120, so that the angle between the positioning portion 140 and housing connection portions 133 increases, thus forming an obtuse angle α. The setting of the obtuse angle α between the housing connection portion 133 and the positioning portion 140 increases the vertical distance between the lower end of the positioning portion 140 and the electrode assembly 120, thus reducing the probability that the positioning portion 140 is inserted into the electrode assembly 120 and damages the electrode sheet when the housing 110 is pier-sealed.

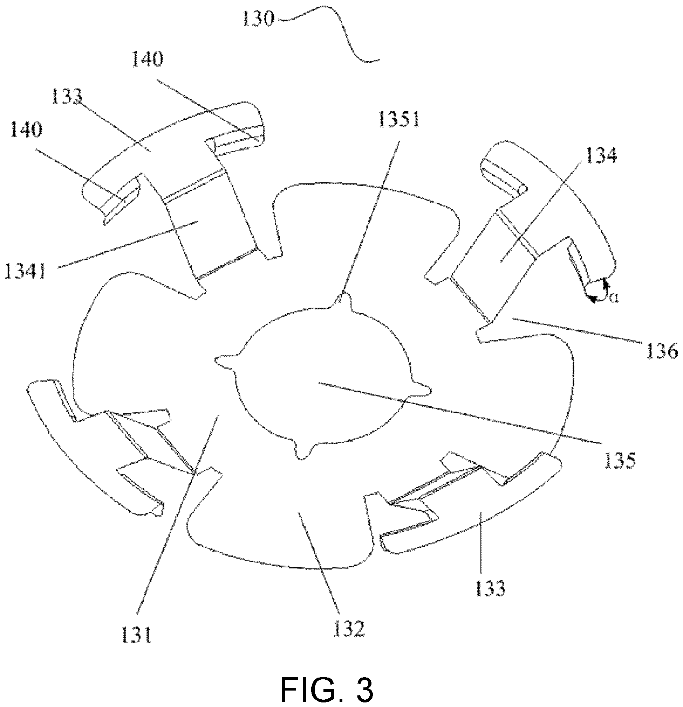

In an example of the cylindrical battery cell 100 of the present disclosure, please refer to FIG. 2 and FIG. 3. A stress buffering structure is disposed on the connection arm 134 to reduce the stress transmitted to the tab connection portion 132 and the plate body 131 during pier-sealing. When the housing 110 is pier-sealed, a large compressive stress will be generated on the housing connection portion 133. The compressive stress will be transmitted to the tab connection portion 132 through the connection arm 134, and the stability of welding of the tab connection portion 132 will be affected. By disposing a stress buffering structure on the connection arm 134, a part of the stress transmitted by the housing connection portion 133 may be alleviated. On the one hand, the stress transmitted to the tab connection portion 132 may be reduced, thereby improving the stability of welding connection of the tab connection portion 132. On the other hand, it is possible to decrease the stress on the plate body 131, so the stress deformation generated by the plate body 131 will be reduced, thereby reducing the probability of the plate body 131 being torn and damaged due to excessive stress deformation. It should be noted that the stress buffering structure may be any structure that can serve a stress buffering function, such as a bending structure or a flexible material for connection, the disclosure is not limited thereto.

Please refer to FIG. 2 and FIG. 3. In an example of the cylindrical battery cell 100 of the present disclosure, the connection arm 134 is integrally connected to the housing connection portion 133 and the plate body 131. The connection arm 134 includes a plurality of bending portions 1341, and the bending portion 1341 is deformed when being pressed. The bending angle of the bending portion 1341 may be any degrees, and the shape of the bending portion 1341 may be a combination of multiple shapes or a repeated arrangement of a single shape. For example, the bending portion 1341 may be an arrangement of multiple arc-shaped protrusions, or may be a wavy structure composed of multiple undulations, etc. In an example of the present disclosure, please refer to FIG. 2 and FIG. 3, along the height direction of the housing 110, there is a height difference between the housing connection portion 133 and the plate body 131. One end of the connection arm 134 is connected to the plate body 131 at a lower level, the other end of the connection arm 134 is connected to the housing connection portion 133 at a higher level. A plurality of bending portions 1341 are disposed at the connection between the connection arm 134 and the plate body 131. The plurality of bending portions 1341 are connected in sequence to form a protrusion in the direction facing away from the electrode assembly 120. Such configuration not only makes it possible to achieve the function of stress buffering, reduce the transmission of stress on the connection arm 134, improve the stability of welding of the tab connection portion 132, but also makes it possible to form a smooth transition connection between the connection arm 134 and the plate body 131, reduce the stress concentration at this position and improve the connection strength between the connection arm 134 and the plate body 131.

In an example of the cylindrical battery cell 100 of the present disclosure, the connection arm 134 and the housing connection portion 133 are independent parts, and the connection arm 134 is made of a flexible material. The flexible material may be any flexible materials that meet the requirements of electrical conductivity and connection strength such as a conductor formed by stacking multiple layers of metal foil. One end of the connection arm 134 is connected to the housing connection portion 133, and the other end of the connection arm 134 is connected to the plate body 131. The connection method between the connection arm 134, the housing connection portion 133 and the plate body 131 may be welding or riveting that meets the requirements of connection strength and conductivity performance. By setting the connection arm 134 to a flexible material, since the flexible material is able to buffer the stress transmitted on the connection arm 134 through the deformation of the flexible material, it is possible to alleviate the stress transmitted from the housing connection portion 133 to the tab connection portion 132 through the connection arm 134, so that the stress deformation generated on the tab connection portion 132 may be decreased, and the stability of welding of the tab connection portion 132 may be enhanced. In the meantime, the stress applied on the plate body 131 may be decreased and the probability of the plate body 131 being torn and damaged due to large stress deformation may be reduced.

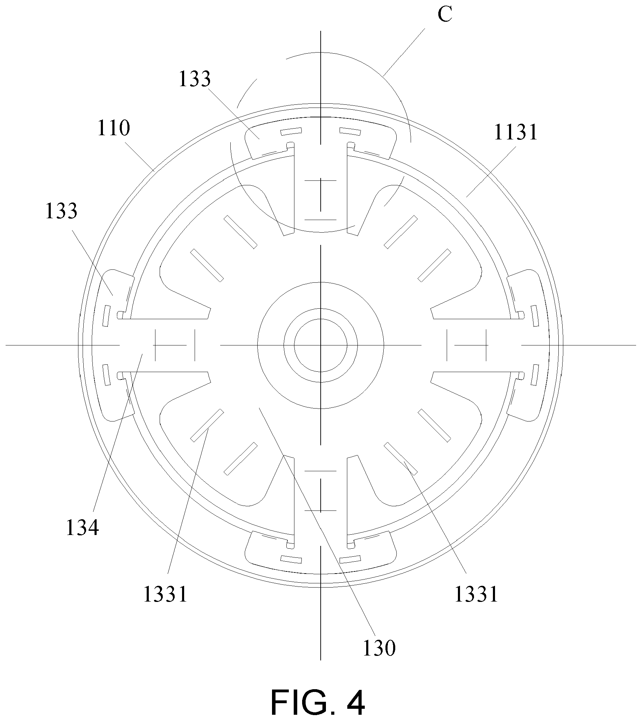

Please refer to FIG. 4 to FIG. 9. In an example of the cylindrical battery cell 100 of the present disclosure, a sealing ring 150 is disposed on one side of the rolling groove 113 away from the electrode assembly 120, and an avoidance structure 151 is disposed on an end surface of the sealing ring 150 facing the housing connection portion 133 to avoid the welding mark 1331 formed by the housing connection portion 133 on the rolling groove 113. The avoidance structure 151 may be an annular groove structure or a plurality of local notch structures, and the size and number of the notches match the number and size of the housing connection portion 133. In an embodiment of the present disclosure, please refer to FIG. 9. The avoidance structure 151 is an annular groove structure. By setting the avoidance structure 151, an avoidance space may be formed between the sealing ring 150 and the rolling groove 113, so that the housing connection portion 133 is accommodated in the avoidance space. When the housing 110 is pier-sealed, the pressing force generated by the sealing ring 150 on the housing connection portion 133 may be reduced, and therefore it is possible to reduce the probability that the welding mark 1331 on the housing connection portion 133 is damaged and failed, thus enhancing the stability of the welding connection between the housing connection portion 133 and the rolling groove 113.

Please refer to FIG. 2 to FIG. 4. In an example of the cylindrical battery cell 100 of the present disclosure, the plate body 131 is disposed at the center of the current collector 130, the tab connection portion 132 is disposed along the circumferential direction of the plate body 131, and the connection arm 134 is disposed between the adjacent tab connection portions 132. One end of the connection arm 134 in the length direction is connected to the plate body 131, and the other end of the connection arm 134 in the length direction is connected to the housing connection portion 133. Hollow regions 136 are disposed on both sides of the connection arm 134 in the width direction, and the connection arm 134 is cantilevered along the length direction between two adjacent tab connection portions 132. The configuration of the hollow region 136 makes the connection arm 134 and the adjacent tab connection portions 132 to be partially disconnected. Such configuration may further reduce the stress transmitted from the connection arm 134 to the tab connection portion 132, thereby reducing the stress deformation on the tab connection portion 132 and improving the stability of the welding connection of the tab connection portion 132. It should be noted that there is no specific limitation to the specific structural form of the hollow region 136. The hollow region 136 may have any structural shape such as a long strip structure, a square structure, etc.; there is no limitation to the area size of the hollow region 136 as long as the requirement of current-guiding for the connection arm 134 and the requirement of welding strength for the tab connection portion 132 can be met. Preferably, in this embodiment, the hollow region 136 is a wedge-shaped structure, and one end of the wedge-shaped structure with a large opening faces the housing connection portion 133. Such configuration not only makes it possible to ensure that when the housing connection portion 133 is pressed, the connection arm 134 will not easily come into contact with the tab connection portions 132 on adjacent sides when deformed to avoid stress transmission, but also ensure the connection strength between the connection arm 134 and the plate body 131.

Please refer to FIG. 2 and FIG. 3. In an example of the cylindrical battery cell 100 of the present disclosure, an exhaust hole 135 is disposed in the center of the current collector 130, and a cut 1351 is disposed on the side wall along the circumference of the exhaust hole 135. There is no specific limitation to the shape and number of the cut 1351, for example, the cut 1351 may be strip-shaped, triangular, or pointed. When thermal runaway occurs in the cylindrical battery cell 100, the high-temperature gas in the cylindrical battery cell 100 needs to be quickly discharged from the explosion-proof valve on the end cap 160 to achieve directional explosion in the axial direction to reduce the accumulation of high-temperature gas inside the cylindrical battery cell 100 and avoid explosion of the cylindrical battery cell 100 in the lateral direction. By setting the cut 1351, the current collector 130 forms a fragile region at the cut 1351. When the thermal runaway occurs in the cylindrical battery cell 100, the current collector 130 will form a tear at the cut 1351 under the action of high-temperature pressure, and the current collector 130 will be quickly torn apart, so that the high-pressure gas in the electrode assembly 120 can be quickly discharged to quickly relieve pressure and reduce the probability of explosion of the cylindrical battery cell 100 in the lateral direction.

The present disclosure further provides a battery assembly, which includes the cylindrical battery cells 100 described in any one of the examples provided above, and a plurality of cylindrical battery cells 100 are connected in series or in parallel. Or, a plurality of cylindrical battery cells 100 are connected in series and in parallel as a combination to form the battery modules and battery packs.

The present disclosure further provides an electrical device, which includes a working portion and the battery assembly described above, and the working portion is electrically connected to the battery assembly to obtain electrical energy for support. The working portion may be a unit component that is able to obtain the electric energy of the battery assembly and perform corresponding work, such as a blade rotating unit of a fan, a dust collection working unit of a vacuum cleaner, a wheel driving unit in an electric vehicle, etc. The electrical device may be vehicles, cell phones, portable devices, laptops, ships, spacecraft, electric toys and power tools, etc. Vehicles may be fuel vehicles, gas vehicles or new energy vehicles, and new energy vehicles may be pure electric vehicles, hybrid vehicles or extended-range vehicles, etc.; spacecraft include aircraft, rockets, space shuttles, spaceships, etc.; electric toys include fixed type or mobile electric toys, such as game consoles, electric toy cars, electric toy ships and electric toy airplanes, etc.; electric tools include metal cutting electric tools, grinding electric tools, assembly electric tools and railway electric tools, for example, electric drills, electric grinders, electric wrenches, electric screwdrivers, electric hammers, impact drills, concrete vibrators, planers and more. The embodiments of this disclosure impose no special limitation to the above-mentioned electrical device.

In the cylindrical battery cell 100 of the present disclosure, the positioning portion 140 is disposed on the housing connection portion 133 and/or the connection arm 134, which serves a position-limiting function in the radial direction during the pressing process of the housing connection portion 133, thereby accurately controlling the displacement in the radial direction, and realizing the accurate positioning and connection of the housing connection portion 133 in the radial direction of the rolling groove 113. In this way, the stability of the welding connection area between the housing connection portion 133 and the rolling groove 113 is enhanced, so that the stability of the overall current-carrying capacity of the cylindrical battery cell 100 is increased. In the meantime, the positioning portion 140 is disposed as a panel structure, so that during the pressing process of the housing connection portion 133, there is a linear contact between the panel structure and the inner side wall 1132 of the rolling groove 113, which reduces the sliding resistance between the positioning portion 140 and the inner side wall 1132 of the rolling groove 113. In this way, it is possible to reduce the probability that the positioning portion 140 or the inner side wall 1132 of the rolling groove 113 is damaged during the pressing process, thus improving the accuracy for the positioning portion 140 of the housing 110 to position the rolling groove 113 in the radial direction. Therefore, the disclosure effectively overcomes some practical problems in the related art and has high values of utilization and significance of use.

## Claims

1. A cylindrical battery cell (100) comprising:
a housing (110) comprising an opening (114), wherein a rolling groove (113) is formed on a side wall of the opening (114);
an electrode assembly (120) sealed and disposed in the housing (110), wherein the rolling groove (113) limits a movement of the electrode assembly (120) in an axial direction, and a first tab (121) is disposed on one side of the electrode assembly (120) facing the opening (114);
a current collector (130) disposed in the housing (110), wherein the current collector (130) comprises a housing connection portion (133), a tab connection portion (132) and a connection arm (134), wherein the housing connection portion (133) is connected to the tab connection portion (132) through the connection arm (134), the housing connection portion (133) is connected to one side of the rolling groove (113) facing away from the electrode assembly (120), and the tab connection portion (132) is connected to the first tab (121);
wherein, a positioning portion (140) is disposed on the housing connection portion (133) and/or the connection arm (134), and the positioning portion (140) is disposed to limit displacement of the housing connection portion (133) in a radial direction.

2. The cylindrical battery cell (100) according to claim 1, wherein the current collector (130) further comprises a plate body, the housing connection portion (133) and the plate body are connected through the connection arm (134), and the housing connection portion (133) extends along a circumferential direction of the housing (110), the positioning portion (140) is formed by the housing connection portion (133) extending toward the electrode assembly (120) along a height direction of the housing (110), and the positioning portion (140) abuts against an inner side wall (1132) of the rolling groove (113).

3. The cylindrical battery cell (100) according to claim 1 or 2, wherein at least two of the positioning portions (140) are disposed on the housing connection portion (133), and the at least two positioning portion (140) are located on both sides of the connection arm (134).

4. The cylindrical battery cell (100) according to any one of claims 1 to 3, wherein the positioning portion (140) is formed by the connection arm (134) extending toward the electrode assembly (120) along a height direction of the housing (110), and the positioning portion (140) abuts against an inner side wall (1132) of the rolling groove (113).

5. The cylindrical battery cell (100) according to any one of claims 1 to 4, wherein an obtuse angle is formed between the positioning portion (140) and the housing connection portion (133).

6. The cylindrical battery cell (100) according to any one of claims 1 to 5, wherein a stress buffering structure is disposed on the connection arm (134).

7. The cylindrical battery cell (100) according to any one of claims 1 to 6, wherein the connection arm (134), the housing connection portion (133) and the plate body are formed integrally, the connection arm (134) comprises a plurality of bending portions (1341), and the bending portions (1341) are deformed when being pressed.

8. The cylindrical battery cell (100) according to any one of claims 1 to 7, wherein the connection arm (134) and the housing connection portion (133) are independent parts, and the connection arm (134) is made of a flexible material.

9. The cylindrical battery cell (100) according to any one of claims 1 to 8, wherein a sealing ring (150) is disposed on one side of the rolling groove (113) away from the electrode assembly (120), and an avoidance structure (151) is disposed on an end surface of the sealing ring (150) facing the housing connection portion (133).

10. The cylindrical battery cell (100) according to any one of claims 1 to 9, wherein the avoidance structure (151) is an annular groove structure, and the housing connection portion (133) is accommodated in the annular groove structure.

11. The cylindrical battery cell (100) according to any one of claims 1 to 10, wherein the connection arm (134) is disposed between the adjacent tab connection portion (132)s, and the connection arm (134) and the tab connection portion (132) are partially disconnected.

12. The cylindrical battery cell (100) according to any one of claims 1 to 11, wherein an exhaust hole (135) is disposed in a center of the current collector (130), and a cut (1351) is disposed on a side wall along a circumference of the exhaust hole (135).

13. A battery assembly comprising the cylindrical battery cell (100) according to any one of claims 1 to 12.

14. An electronic device comprising the battery assembly according to claim 13.
